# EUROPÄISCHE PATENTSCHRIFT

(11) **EP 2 435 309 B1**
(45) Veröffentlichungstag und Bekanntmachung des Hinweises auf die Patenterteilung: **15.05.2013**
(21) Anmeldenummer: 10722335.6
(22) Anmeldetag: 25.05.2010
(51) Int. Cl.: G06Q 99/00

(54) **DIEBSTAHLSCHUTZ BEIM SICHERHEITS-CHECK VON HANDGEPÄCK**
THEFT PROTECTION DURING THE SECURITY CHECK OF CARRY-ON LUGGAGE
PROTECTION ANTIVOL A UTILISER LORS DU CONTROLE DE SECURITE DE BAGAGES A MAIN

(30) Priorität: 26.05.2009 DE 102009022716
(43) Veröffentlichungstag der Anmeldung: 04.04.2012
(73) Patentinhaber: Siemens Aktiengesellschaft, 80333 München (DE)
(72) Erfinder: RAUH, Ingolf, 78479 Reichenau (DE); WILKE, Wolf-Stephan, 78467 Konstanz (DE); BRÜTT, Jörn, 90419 Nürnberg (DE)
(74) Vertreter: Wolff, Harry
(86) Internationale Anmeldenummer: PCT/EP2010/057153
(87) Internationale Veröffentlichungsnummer: WO 2010/136451

(56) Entgegenhaltungen:
- DE-U1- 20 007 970
- US-A1- 2004 016 271
- US-A1- 2005 193 648
- US-A1- 2007 132 580
- US-B1- 6 637 563

## Beschreibung

Die Erfindung betrifft einen Diebstahlschutz beim Sicherheits-Check von Handgepäck und/oder anderen persönlichen Gegenständen in Passagierterminals von Flughäfen oder dergl., bei dem die kleineren Gegenständen vom Passagier vor seiner Personenkontrolle in ein Behältnis gelegt und in diesem zur Durchleuchtung durch ein Screening-Gerät transportiert werden, auf dessen Ausgangsseite das Behältnis nach der Personenkontrolle des Passagiers zur Entnahme seiner als unverdächtig erkannten Gegenstände bereit gestellt wird, wobei das Behältnis vor dem Screening mit einem Schloss abschließbar ist.

Beim Handgepäck-Screening auf Flughäfen muss der Flugpassagier heute bestimmte kleinere Gegenstände wie Notebook, Portemonnaie, Gürtel, Uhren, etc. gesondert vom Handgepäck auf ein Tablett legen, welches dann auf der Fördereinrichtung durch das Screening-Gerät transportiert und dort untersucht wird, während der Passagier parallel dazu durch ein Kontroll-Tor läuft. Im Allgemeinen sind die beiden zeitlich parallel ablaufenden Vorgänge nicht so gut synchronisierbar, dass sich der Passagier vor Ankunft des Tabletts wieder an der Fördereinrichtung befindet und seine persönlichen Gegenstände sofort wieder an sich nehmen kann. Es kommt sehr häufig vor, dass das Tablett früher als der Passagier fertig untersucht ist und dann unbeaufsichtigt am Ende der Fördereinrichtung steht bis der Passagier dort ankommt. Während dieser Zeitspanne bietet sich für Diebe die Gelegenheit, persönliche Gegenstände zu stehlen. Dieses Phänomen wird in letzter Zeit vermehrt beobachtet.

Aus der Druckschrift US 2004/016271 A1 ist ein gattungsgemäßer Diebstahlschutz bekannt, bei dem das Behältnis vor dem Screening mit einem Schloss abschließbar ist. Hierdurch kann der Zugriff eines Unbefugten zumindest während der Personenkontrolle vorteilhaft verhindert werden.

Ausgehend hiervon besteht die Aufgabe der Erfindung darin, die Sicherheit beim Sicherheits-Check von Handgepäck, wenn sich die persönlichen Gegenstände des Passagiers nach dem Durchlaufen des Screening-Gerätes noch unbeaufsichtigt in den Behältnissen befinden, mit denen sie das Screening-Gerät durchlaufen haben, noch weiter zu erhöhen.

Zur Lösung dieser Aufgabe wird vorgeschlagen, dass ein Personal des Sicherheits-Checks mittels einer Steuereinrichtung einen Zustand des Schlosses und/oder eines dem Schloss zugeordneten Schlüssels ändert.

Ein "Zustand" des Schlosses kann dem auf- und/oder abgeschlossenen Zustand entsprechen, wobei das Personal selbst das Behältnis mittels der Steuereinrichtung, die in diesem Fall vorzugsweise einem dem Schloss zugeordneten Schlüssel entspricht, auf- bzw. abschließt. Unter einem "Zustand" des Schlosses und/oder eines dem Schloss zugeordneten Schlüssels kann ferner eine Konfiguration des Schlosses bzw. des Schlüssels verstanden werden, die mittels der Steuereinrichtung wählbar ist und eine Betätigung des Schlosses mittels des Schlüssels durch den Passagier ermöglicht oder verhindert. Das Schloss und/oder der Schlüssel kann somit mittels der Steuereinrichtung zu dieser Betätigung freigegeben und/oder, um eine Betätigung durch den Passagier zu verhindern, gesperrt werden. Hierdurch kann durch das Personal bestimmt werden, zu welchem Zeitpunkt das Behältnis vom Passagier ab- und/oder aufgeschlossen werden darf.

In einer bevorzugten Ausführung der Erfindung wird vorgeschlagen, dass der Schlüssel des Schlosses vom Passagier während der Personenkontrolle am Körper getragen wird. Dieser Vorschlag bietet die Möglichkeit, dass nur der autorisierte Passagier Zugriff zu seinen im Behältnis befindlichen Gegenständen erhält, also Zugriff durch Unbefugte verhindert oder zumindest erschwert wird. Da der Passagier den Schlüssel, mit dem er das Behältnis vor dem Screening verschlossen hat, am Körper trägt, während er selbst sich der Sicherheitskontrolle unterzieht, kann ein unbefugter Griff in das Behältnis mit den persönlichen Gegenständen zumindest nicht unbemerkt erfolgen. Der Passagier kann beruhigt sein, dass seine Gegenstände sicher sind, während er sich der Personenkontrolle unterziehen muss.

Außerdem ist von Vorteil, wenn der Passagier mittels eines dem Schloss zugeordneten Schlüssels das Behältnis ab - und/oder aufschließen kann. Hierdurch kann der Passagier das Behältnis aus eigener Initiative und zu einem von ihm gewählten Zeitpunkt vor bzw. nach der Personenkontrolle das Behältnis abschließen bzw. aufschließen, ohne dass ein Personal des Sicherheitschecks bei dem Abschließ- und/oder Aufschließvorgang tätig sein muss.

Ferner wird insbesondere vorgeschlagen, dass das Personal mittels der Steuereinrichtung nach der Personenkontrolle das Behältnis zur Entnahme der Gegenstände durch den Passagier freigibt. Hierdurch kann insbesondere die vorzeitige Entnahme von Gegenständen durch den Passagier verhindert werden, die einer weiteren Überprüfung durch das Personal unterliegen müssen, oder die Entnahme kann beim Auftreten besonderer Ereignisse, wie z.B. bei einer ausgelösten Sicherheitsalarm oder einer Notsituation, verhindert werden. Hierbei kann die Freigabe mit dem Aufschließen des Behältnisses durch das Personal erfolgen, oder das Personal kann mittels der Steuereinrichtung den Zustand des Schlosses und/oder eines dem Schloss zugeordneten Schlüssels ändern, damit das Schloss mittels des Schlüssels vom Passagier zum selbstständigen Aufschließen des Behältnisses betätigt werden kann. Besondere Sicherheit ermöglicht die Erfindung, wenn nach einem bevorzugten Vorschlag vorgesehen ist, dass zum Abschließen des Behälters ein programmierbares und auslesbares RFID-Schloss vorgesehen ist, das mit einem elektronischen Schlüssel zu verschließen und zu öffnen ist. Im Gegensatz zu einem rein mechanischen Schloss, bei dem nur ein Schlüssel in ein Schloss passt, bietet das RFID-Schloss den Vorteil, dass ein elektronischer Schlüssel in Form eines RFID-Tags aus einer Gesamtheit von Schlüsseln mit jedem elektronischen Schloss in Form eines RFID-Lese- /Schreibgerätes aus einer Gesamtheit von Schlössern frei kombiniert werden kann. Solche Systeme sind heute bereits kommerziell im Einsatz, z.B. als Spindschlösser in Schwimmbädern oder für Türen in Hotels.

In einer alternativen Ausgestaltung der Erfindung kann auch ein optischer oder biometrischer Schlüssel in frage kommen, ersterer beispielsweise als Barcode und letzterer etwa in Form des Fingerabdrucks des Passagiers.

In einer Variante der Erfindung ist das Behältnis als allseits verschließbare Box ausgeführt ist. In die Box, die beispielsweise aus Kunststoff mit einem durch das Schloss verschließbarem Deckel besteht, packt der Passagier seine persönlichen Gegenstände hinein und verschließt diese mit einem elektronischen RFID-Schlüssel. Am Ende der Fördereinrichtung, nach dem Screening, wartet die verschlossene Box auf den Passagier, die er und nur er mit dem RFID-Schlüssel öffnen kann, den er während der Sicherheits-Untersuchung am Körper getragen hat.

Ein unbefugtes komplettes Entfernen des Behältnisses ist erfindungsgemäß mittels Identifizierungs- oder Lokalisierungstechniken erfaßbar und mittels Alarmierung und/oder eines Videosystems anzeigbar. Nimmt ein Unbefugter das Behältnis mit Inhalt von der Fördertechnik, bevor das elektronische Schloss entsperrt ist, so ertönt beispielsweise ein Alarm und/oder eine Videokamera zeichnet das Geschehen um den Behälter auf. Dem System wird dazu bekannt gemacht, ob der Behälter sich im verschlossenen oder geöffneten Zustand befindet. Dies kann erfindungsgemäß dadurch geschehen, dass das elektronische Schloss, neben dem Auslesen und Beschreiben des RFID-Schlüssels, auch noch zur Abgabe einer Statusinformation als Funk- oder Lichtsignal an einen entsprechenden Sensor gestaltet ist. Ein solcher Sensor kann erfindungsgemäß Bestandteil einer Fördereinrichtung zum Transport des Behältnisses sein.

Es ist aber auch im Rahmen der Erfindung möglich, das Behältnis als offener Behälter, z.B. als übliches Tablett auszubilden und den unbefugten Zugriff auf andere Weise zu verhindern.

Um den Diebstahlschutz auch von offenen Behältern darzustellen, ist nach einem günstigen Merkmal der Erfindung vorgesehen, den elektronisch verschlossenen Behälter Video zu überwachen. Der Vorgang spielt sich genau wie bei der Variante mit geschlossenen Behältnissen ab, jedoch mit dem Unterschied, dass die Überwachung des noch "gesperrten" offenen Behälters am Ende der Fördereinrichtung zusätzlich mit einem Videosystem erfolgt, welches den Behälter gegen unbefugten Zugriff auf die darauf befindlichen Gegenstände überwacht und entsprechend Alarm schlägt, wenn ohne vorheriges "Entsperren" des Behälters, d.h. des Schlosses, ein Zugriff erfolgt. Die Statusinformation des Behälters (verschlossen/geöffnet) kann erfindungsgemäß hier vorteilhaft per Lichtsignal gegeben werden und direkt vom Videosystem ausgewertet werden.

Wie bei herkömmlichen Systemen ohne Diebstahlschutz werden die Behälter im bevorzugten Fall als "Umlaufmittel" eingesetzt. Hier laufen sowohl die Boxen bzw. Tabletts mit dem Schloss als auch die Schlüssel im Bereich des Handgepäck-Screenings lokal um. Dazu ist nur eine relativ geringe Anzahl an Behältern und Schlüsseln nötig, wodurch die Investitionskosten und der Lagerraum gering gehalten werden können.

Natürlich ist auch die Verwendung von "Durchlaufmitteln" im Rahmen der Erfindung denkbar. Hier würde der Passagier den Behälter und den RFID-Schlüssel mitbringen und auch wieder mitnehmen. Dies hätte für den Passagier (und den Anlagenbetreiber) den Vorteil, dass die vorbereitenden und nachbereitenden Aktivitäten zum Handgepäck-Screening entkoppelt von der Anlage stattfinden könnten. Für den Passagier spielt sich das Ganze in entspannterer Atmosphäre ab und es besteht Potential zur Steigerung des Anlagendurchsatzes.

Dieser Effekt ließe sich allerdings auch beim Umlaufmittel-Prinzip durch andere Prozessgestaltung erreichen. Auch beliebige Kombinationen von Umlaufmittel und Durchlaufmittel sind denkbar, z.B. Mitbringen des Tabletts zum Handgepäck-Screening, aber Belassen des Tabletts dort nach erfolgter Untersuchung.

Der besondere Vorteil der Erfindung besteht in dem wirksamen Schutz des Flugpassagiers vor Diebstahl persönlicher Gegenstände beim Handgepäck-Screening, wenn der Passagier durch eigene Sicherheitskontrollen nicht in der Lage oder abgelenkt ist, seine persönlichen Gegenstände zu beobachten und zu überwachen.

Ein Ausführungsbeispiel der Erfindung ist in der Zeichnung dargestellt und wird nachfolgend beschrieben.

Es zeigen
- Figur 1: den Diebstahlschutz beim Handgepäck-Screening einer verschließbaren Box,
- Figur 2: den Diebstahlschutz beim Handgepäck-Screening eines offenen Tabletts,
- Figur 3: die Box bzw. das Tablett nach der Erfindung als Umlaufmittel und
- Figur 4: die Box und das Tablett nach der Erfindung als Durchlaufmittel.

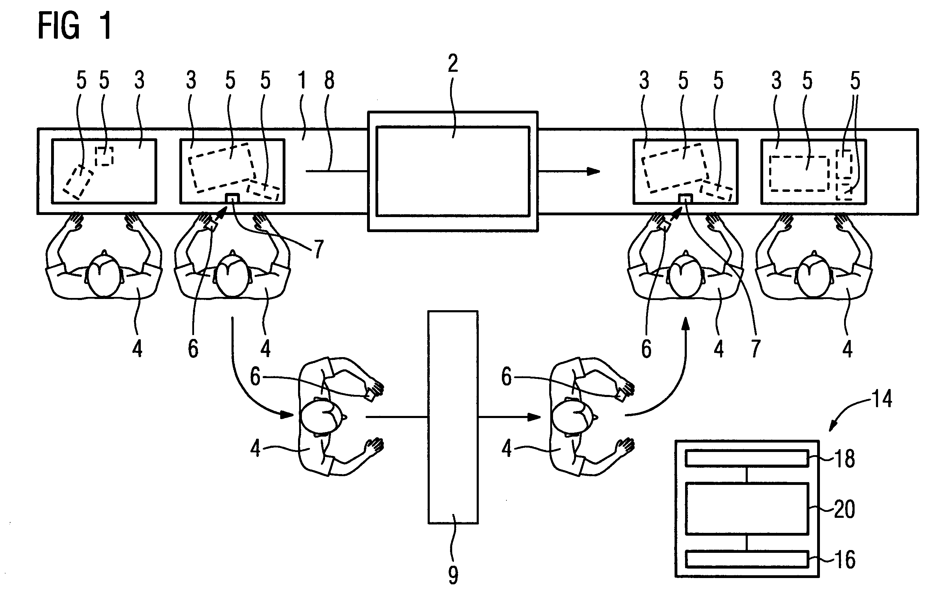

In Figur 1 ist in grob schematischer Darstellung eine Draufsicht auf den Sicherheitscheckbereich eines Flughafens dargestellt. Mit 1 ein Förderer bezeichnet, der in bekannter Weise durch ein Screening-Gerät 2, ein Röntgengerät, geführt ist und auf dem die auf dem Förderer 1 aufliegenden Boxen 3 von der (in der Zeichnung) linken Seite des Screening-Gerätes 2 zur rechten Seite des Screening-Gerätes 2 transportiert werden. Die Boxen 3 sind in dieser Darstellung als geschlossene Kunststoffbehälter mit Deckel ausgeführt, in die der bei 4 symbolisierte Passagier seine persönlichen Gegenstände 5 ablegt. Nach Schließen des Deckels der Box 3 verschließt der Passagier 4 mit einem RFID-Schlüssel 6 das RFID-Schloss 7 an der Box 3 und sperrt diese gegen unbefugtes Öffnen. Die Box 3 wird in Pfeilrichtung 8 durch das Screening-Gerät 2 transportiert, durchleuchtet und ggf. vom Sicherheitspersonal hinsichtlich verdächtiger Gegenstände geprüft. An der Ausgangsseite des Screening-Gerätes 2(also in der Zeichnung rechts) werden die Boxen 3 auf dem Förderer 1 abgestellt und warten dort auf den Passagier 4. Dieser hat inzwischen zusammen mit seinem RFID-Schlüssel 6 das Kontrolltor 9 passiert und gelangt auf die andere Seite des Screening-Gerätes 2, wo seine Box 3 mit seinen persönlichen Gegenständen 5 wartet. Mit dem RFID-Schlüssel 6, den er am Körper getragen hat, öffnet er die Box 3 und entnimmt die darin enthaltenen Gegenstände 5, ohne dass ein Unbefugter die Chance gehabt hat, an die Gegenstände 5 zu gelangen.

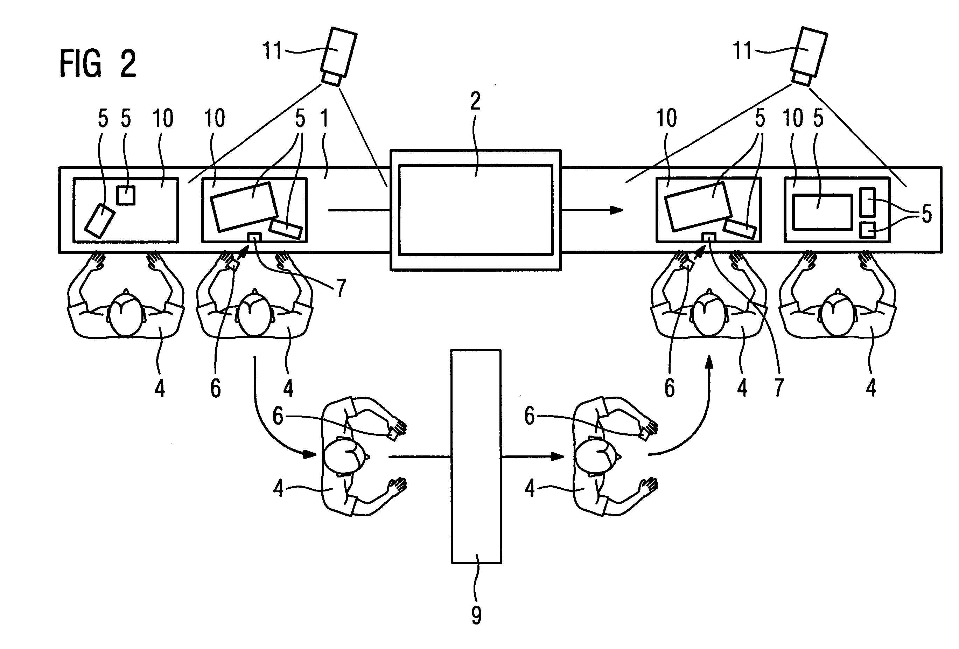

In Figur 2 ist das gleiche System am Beispiel offener Tabletts 10 dargestellt. Hier hat der Passagier 4 seine persönlichen Gegenstände 5 in das Tablett 10 gelegt, das auf dem Förderer 1 vor dem Screening-Gerät 2 zur Verfügung gestellt ist. Mit einem RFID-Schlüssel 6 "sperrt" der Passagier 4 das Tablett für unbefugte Zugriffe und aktiviert dabei das Videosystem 11, das das jeweilige Tablett 10 kontrolliert. Die Aktivierung des Videosystems 11 kann beispielsweise mittels Funk-Lichtsignalen erfolgen, die von einem entsprechenden (nicht dargestellten) Sensor abgestrahlt werden. Wie im Beispiel in der Figur 1 begibt sich der Passagier 4 im Anschluss daran zur Personenkontrolle und durchläuft zusammen mit dem RFID-Schlüssel 6 das Kontrolltor 9 in den Sicherheitsbereich. Auf der anderen Seite des Kontrolltors 9 geht der Passagier 4 zu seinem Tablett 10 und "entsperrt" mit seinem RFID-Schlüssel 6 das Tablett 10. So lange das Tablett 10 gesperrt war, überwacht das Videosystem 11 das Tablett 10 auf unerlaubten Zugriff und gibt ggf. Alarm, wenn ein Unbefugter sich an dem Tablett 10 zu schaffen macht. Erst nach dem Entsperren des Tabletts 10 mit dem RFID-Schlüssel 6 wird das RFID-Schloss 7 "entschärft", der berechtigte Passagier 4, der mit dem richtigen RFID-Schlüssel 6 die Entsperrung vorgenommen hat, hat nur Zugriff zu seinen persönlichen Gegenständen 5.

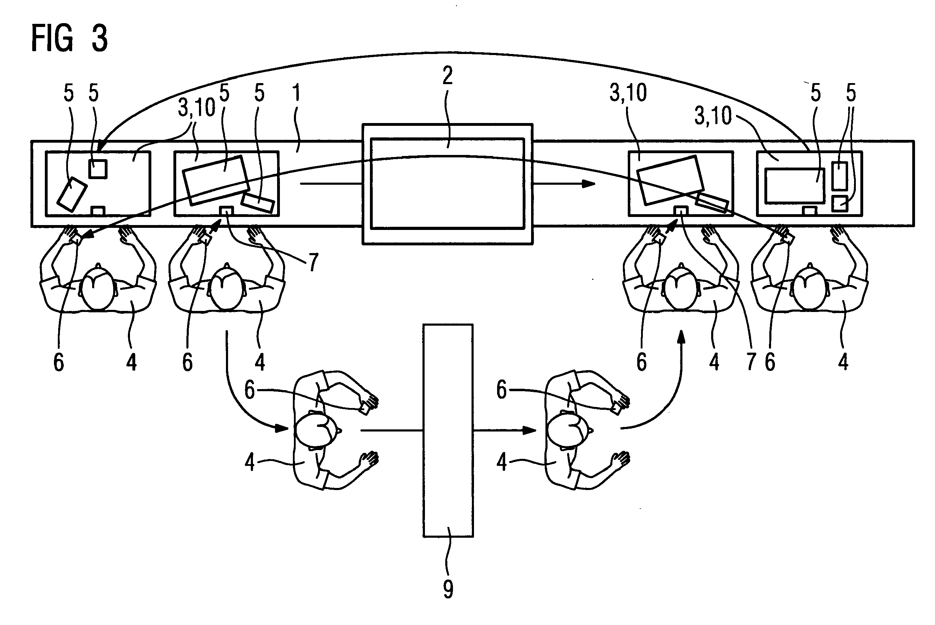

In Figur 3 ist symbolisch dargestellt, wie eine Box 3 oder ein Tablett 10 als Umlaufmittel eingesetzt wird. Wie in den Figuren 1 und 2 dargestellt, hat der Passagier 4 mit Hilfe des RFID-Schlüssels 6 die Box 3 bzw. das Tablett 10 gesperrt und geht nun zusammen mit dem RFID-Schlüssel 6 durch das Kontrolltor 9 zur Personenkontrolle. Auf der anderen Seite des Kontrolltors 9 entsperrt der Passagier 4 mit Hilfe des RFID-Schlüssels 6 das RFID-Schloss 7 an der Box 3 oder dem Tablett 10 und gibt den RFID-Schlüssel 6 und die Box 3 bzw. das Tablett 10 mit dem RFID-Schloss 7 und ggf. dem RFID-Schlüssel 6 zurück auf die andere Seite des Screening-Gerätes 2 zum erneuten Einsatz. Dieser Umlauf entspricht dem Umlauf der bekannten Tabletts, die heute ohne Diebstahlschutz eingesetzt werden.

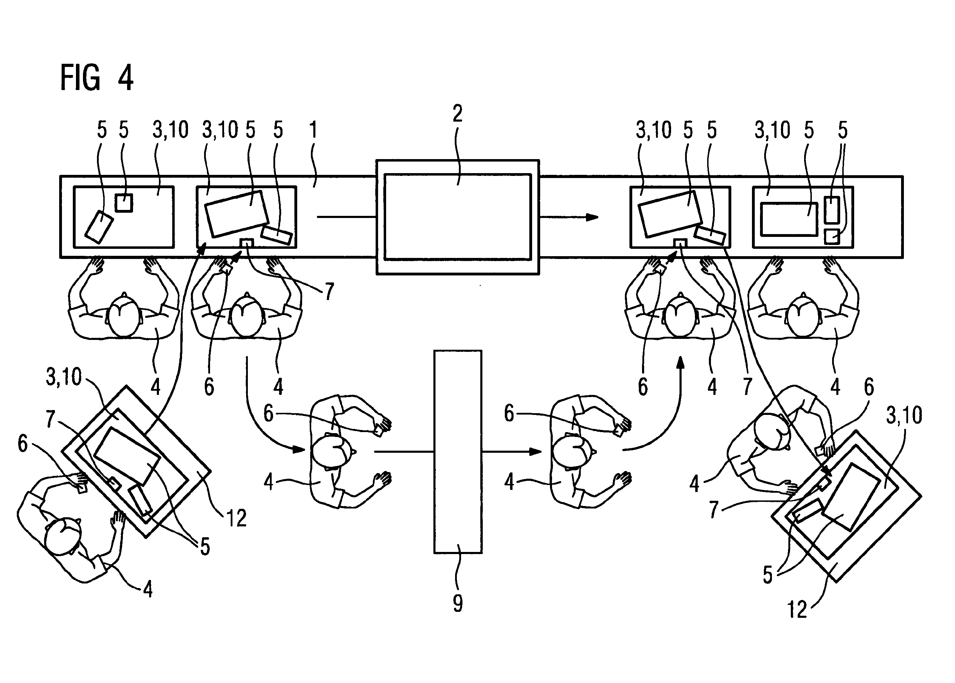

In Figur 4 ist eine Variante dargestellt, bei der die Box 3 bzw. das Tablett 10 mit dem RFID-Schloss 7 und der RFID-Schlüssel 6 als Durchlaufmittel eingesetzt werden. Der Passagier 4 kommt bereits mit einem Tablett 10 oder einer Box 3, in der bzw. auf dem sich seine persönlichen Gegenstände 5 befinden, zum Förderband 1, wo er das Tablett 10 oder die Box 3 auflegt. Auch hier sperrt er die Box 3 oder das Tablett 10 mit Hilfe seines RFID-Schlüssels 6 und begibt sich zur Personenkontrolle durch das Kontrolltor 9. Auf der anderen Seite des Kontrolltors 9 entsperrt er mit dem am Körper mitgeführten RFID-Schlüssel 6 den Behälter und entnimmt diesen dem Förderer 1. Mit einem Gepäckwagen 12 kann er mit dem Behältnis, dem Schloss und dem RFID-Schlüssel den Sicherheitscheckbereich verlassen, ohne dass ein Alarmsignal ertönt, wie dies beim unberechtigten Entnehmen des Behältnisses erfolgen würde.

Bezug nehmend auf Figur 1 wird der Sicherheitschecksbereich erläutert. Eine Steuereinrichtung 14 ist vorgesehen, die zu einer ausschließlichen Bedienung durch das Personal des Sicherheitschecks vorgesehen ist. Die Steuereinrichtung 14 weist eine Ein- und Ausgabeeinheit 16, die zur Bedienung der Steuereinrichtung 14 durch das Personal dient, zumindest ein Kommunikationsmittel 18, das zur Herstellung einer drahtlosen Datenverbindung mit dem jeweiligen Schloss 7 der Behältnisse 3 und/oder mit dem diesem Schloss 7 zugeordneten Schlüssel 6 vorgesehen ist, sowie eine Steuereinheit 20 auf, die Vorgänge mit der Ein- und Ausgabeeinheit 16 und dem Kommunikationsmittel 18 steuert und hierzu mit diesen in Wirkverbindung steht.

Das Personal des Sicherheits-Checks kann, in Bezug auf ein bestimmtes Behältnis 3, mit Hilfe der Steuereinrichtung 14 einen Zustand des Schlosses 7 und/oder des dem Schloss 7 zugeordneten Schlüssels 6 ändern. Nach dem Abschließen des Behältnisses 3 durch den Passagier mittels des Schlüssels 6 wird das Schloss 7 und/oder der Schlüssel 6 in einen Zustand versetzt, in welchem das Betätigen des Schlosses 7 mit Hilfe des Schlüssels 6 unmöglich ist. Dies erfolgt durch das Personal des Sicherheits-Checks mittels der Steuereinrichtung 14, die Steuerdaten an das Schloss 7 bzw. den Schlüssel 6 sendet. Das Schloss 7 bzw. der Schlüssel 6 befindet sich hierbei in einem gesperrten Zustand. Nach Durchführung der Personenkontrolle kann das Aufschließen des Behältnisses 3 durch den Passagier erst erfolgen, nachdem das Personal mittels der Steuereinrichtung 14 den Zustand des Schlosses 7 bzw. des Schlüssels 6 geändert hat und das Schloss 7 und/oder der Schlüssel sich in einem freigegebenen Zustand befindet, in welchem eine Betätigung des Schlosses 7 mittels des Schlüssels 6 möglich ist. Ist eine weitere Untersuchung des Behältnisses 3 notwendig, kann hiermit eine vorzeitige Entnahme der Gegenstände 5 durch den Passagier verhindert werden. Ist keine weitere Untersuchung notwendig, gibt das Personal mit Hilfe der Steuereinrichtung 14 das Behältnis 3 zur Entnahme der Gegenstände 5 durch den Passagier frei.

In einer weiteren Ausführungsvariante ist denkbar, dass das Personal das Behältnis 3 mittels der Steuereinrichtung 14 und/oder mittels des Schlüssels 6 ab- und/oder aufschließt.

## Patentansprüche

1. Diebstahlschutz beim Sicherheits-Check von Handgepäck und/oder anderen persönlichen Gegenständen (5) in Passagierterminals von Flughäfen oder dergl., bei dem die Gegenständen vom Passagier (4) vor seiner Personenkontrolle in ein bereit gestelltes Behältnis (3, 10) gelegt und in diesem zur Durchleuchtung durch ein Screening-Gerät (2) transportiert werden, auf dessen Ausgangsseite das Behältnis nach der Personenkontrolle des Passagiers zur Entnahme seiner als unverdächtig erkannten Gegenstände bereit gestellt wird, wobei das Behältnis (3, 10) vor dem Screening mit einem Schloss (7) abschließbar ist,
**dadurch gekennzeichnet,**
**dass** ein Personal des Sicherheits-Checks mittels einer Steuereinrichtung (14) einen Zustand des Schlosses (7) und/oder eines dem Schloss (7) zugeordneten Schlüssels (6) ändert.

2. Diebstahlschutz nach Anspruch 1,
**dadurch gekennzeichnet, dass**
der Schlüssel (6) des Schlosses (7) vom Passagier (4) während der Personenkontrolle am Körper getragen wird.

3. Diebstahlschutz nach Anspruch 1 oder 2,
**dadurch gekennzeichnet, dass**
der Passagier mittels eines dem Schloss (7) zugeordneten Schlüssels (6) das Behältnis (3, 10) ab- und/oder aufschließt.

4. Diebstahlschutz nach einem der vorhergehenden Ansprüche,
**dadurch gekennzeichnet,**
**dass** das Personal mittels der Steuereinrichtung (14) nach der Personenkontrolle das Behältnis (3, 10) zur Entnahme der Gegenstände durch den Passagier freigibt.

5. Diebstahlschutz nach einem der vorhergehenden Ansprüche,
**dadurch gekennzeichnet, dass**
zum Abschließen des Behältnisses (3, 10) ein programmierbares und auslesbares RFID-Schloss (7) vorgesehen ist, das mit einem elektronischen Schlüssel (6) zu verschließen und zu öffnen ist.

6. Diebstahlschutz nach einem der vorhergehenden Ansprüche,
**dadurch gekennzeichnet, dass**
zum Abschließen des Behältnisses (3, 10) ein elektronisches Schloss (7) vorgesehen ist, das mit einem optischen oder biometrischen Schlüssel (6) zu öffnen ist.

7. Diebstahlschutz nach einem der vorhergehenden Ansprüche,
**dadurch gekennzeichnet, dass**
das Behältnis (3, 10) als allseits verschließbare Box (3) ausgeführt ist.

8. Diebstahlschutz nach einem der Ansprüche 1 bis 6
**dadurch gekennzeichnet, dass**
das Behältnis (3, 10) als offener Behälter (10) ausgebildet ist.

9. Diebstahlschutz nach einem der vorhergehenden Ansprüche,
**dadurch gekennzeichnet, dass**
ein unbefugtes Entfernen des Behältnisses (3, 10) mittels Identifizierungs- oder Lokalisierungstechniken erfaßbar und mittels Alarmierung und/oder eines Videosystems (11) anzeigbar ist.

10. Diebstahlschutz nach einem der vorhergehenden Ansprüche,
**dadurch gekennzeichnet, dass**
das elektronische Schloss (7) zur Abgabe einer Statusinformation als Funk- oder Lichtsignal an einen entsprechenden Sensor gestaltet ist.

11. Diebstahlschutz nach Anspruch 10,
**dadurch gekennzeichnet, dass**
der Sensor Bestandteil einer Fördereinrichtung (1) zum Transport des Behältnisses (3, 10) ist.

12. Diebstahlschutz zumindest nach Anspruch 8,
**dadurch gekennzeichnet, dass**
der elektronisch verschlossene Behälter (10) mittels eines Videosystems (11) überwacht ist.

13. Diebstahlschutz nach den Ansprüchen 10 und 12,
**dadurch gekennzeichnet, dass**
die Statusinformation per Lichtsignal zur Auswertung an das Videosystem (11) abgebbar ist.

14. Diebstahlschutz zumindest nach Anspruch 2,
**dadurch gekennzeichnet, dass**
das Behältnis (3, 10) mit dem Schloss (7) und der Schlüssel (6) als Umlaufmittel im Bereich des Sicherheitschecks vorgesehen sind.

## Claims

1. Theft protection during the security check of carry-on luggage and/or other personal items (5) in passenger terminals of airports or the like, during which the items are placed by the passenger (4) into a provided container (3, 10) before his personal inspection and are transported in said container for X-raying by a screening device (2), on the output side of which the container is provided, after the personal inspection of the passenger, for the removal of his items which have been identified as unsuspicious, wherein the container (3, 10) can be locked with a lock (7) before screening,
**characterized in that**
a member of staff involved in the security check uses a control device (14) to change a state of the lock (7) and/or of a key (6) assigned to the lock (7).

2. Theft protection according to Claim 1,
**characterized in that**
the key (6) for the lock (7) is worn by the passenger (4) on his body during the personal inspection.

3. Theft protection according to Claim 1 or 2,
**characterized in that**
the passenger locks and/or unlocks the container (3, 10) using a key (6) assigned to the lock (7).

4. Theft protection according to one of the preceding claims,
**characterized in that**
the member of staff uses the control device (14) to release the container (3, 10) for the removal of the items by the passenger after the personal inspection.

5. Theft protection according to one of the preceding claims,
**characterized in that**
a programmable and readable RFID lock (7) which can be closed and opened using an electronic key (6) is provided for the purpose of locking the container (3, 10).

6. Theft protection according to one of the preceding claims,
**characterized in that**
an electronic lock (7) which can be opened using an optical or biometric key (6) is provided for the purpose of locking the container (3, 10).

7. Theft protection according to one of the preceding claims,
**characterized in that**
the container (3, 10) is in the form of a box (3) which can be closed on all sides.

8. Theft protection according to one of Claims 1 to 6,
**characterized in that**
the container (3, 10) is in the form of an open receptacle (10).

9. Theft protection according to one of the preceding claims,
**characterized in that**
unauthorized removal of the container (3, 10) can be detected using identification or localization techniques and can be indicated by raising an alarm and/or by means of a video system (11).

10. Theft protection according to one of the preceding claims,
**characterized in that**
the electronic lock (7) is designed to emit an item of status information in the form of a radio or light signal to a corresponding sensor.

11. Theft protection according to Claim 10,
**characterized in that**
the sensor is part of a conveying device (1) for transporting the container (3, 10).

12. Theft protection according to at least Claim 8,
**characterized in that**
the electronically closed receptacle (10) is monitored using a video system (11).

13. Theft protection according to Claims 10 and 12,
**characterized in that**
the status information can be emitted to the video system (11) for evaluation by means of a light signal.

14. Theft protection according to at least Claim 2,
**characterized in that**
the container (3, 10) with the lock (7) and the key (6) are provided in the form of circulating means in the region of the security check.

## Revendications

1. Protection antivol à utiliser lors du contrôle de sécurité de bagages à main et/ou d'autres objets ( 5 ) personnels dans un terminal de passagers d'aéroports ou analogue, dans lequel les objets sont mis par le passager ( 4 ) avant son contrôle personnel dans un réceptacle ( 3, 10 ) déjà mis en place et sont transportés dans celui-ci pour la radiographie dans un appareil ( 2 ) de screening, sur le côté de sortie duquel le réceptacle, après le contrôle de personne du passager, est mis à disposition pour l'enlèvement de ses objets reconnus comme non suspects, dans lequel le réceptacle peut être fermé par une serrure ( 7 ) avant le screening,
**caractérisée en ce qu'**un personnel du contrôle de sécurité modifie au moyen d'un dispositif ( 14 ) de commande un état de la serrure ( 7 ) et/ou une clé ( 6 ) associée à la serrure ( 7 ).

2. Protection antivol suivant la revendication 1,
**caractérisée en ce que**
la clé ( 6 ) de la serrure ( 7 ) est portée sur le corps par le passager ( 4 ) pendant le contrôle de personne.

3. Protection antivol suivant la revendication 1 ou 2,
**caractérisée en ce que**
le passager ferme et/ou ouvre le réceptacle ( 3, 10 ) au moyen d'une clé ( 6 ) associée à la serrure ( 7 ).

4. Protection antivol suivant l'une des revendications précédentes,
**caractérisée en ce que**
le personnel libère, pour le retrait des objets par le passager, le réceptacle ( 3, 10 ) au moyen du dispositif ( 14 ) de commande après le contrôle de personne.

5. Protection antivol suivant l'une des revendications précédentes,
**caractérisée en ce qu'**il est prévu pour la fermeture du réceptacle ( 3, 10 ) une serrure ( 7 ) RFID, qui peut être programmée, qui peut être lue et qui peut être fermée et ouverte au moyen d'une clé ( 6 ) électronique.

6. Protection antivol suivant l'une des revendications précédentes,
**caractérisée en ce qu'**il est prévu pour la fermeture du réceptacle ( 3, 10 ) une serrure ( 7 ) électronique, qui peut être ouverte par une clé ( 6 ) optique ou biométrique.

7. Protection antivol suivant l'une des revendications précédentes,
**caractérisée en ce que** le réceptacle ( 3, 10 ) est réalisé sous la forme d'une boîte ( 3 ) pouvant être fermée de tous les côtés.

8. Protection antivol suivant l'une des revendications 1 à 6,
**caractérisée en ce que**
le réceptacle ( 3 ) est constitué sous la forme d'un récipient ( 10 ) ouvert.

9. Protection antivol suivant l'une des revendications précédentes,
**caractérisée en ce qu'**un retrait non autorisé du réceptacle ( 3, 10 ) peut être détecté au moyen de techniques d'identification ou de localisation et peut être indiqué au moyen d'une alerte et/ou d'un système ( 11 ) vidéo.

10. Protection antivol suivant l'une des revendications précédentes,
**caractérisée en ce que** la serrure ( 7 ) électronique est conformée pour l'émission d'une information d'état sous la forme d'un signal radio ou d'un signal lumineux sur un capteur correspondant.

11. Protection antivol suivant la revendication 10,
**caractérisée en ce que**
le capteur fait partie d'un dispositif ( 1 ) convoyeur de transport du réceptacle ( 3, 10 )

12. Protection antivol suivant au moins la revendication 8,
**caractérisée en ce que**
le récipient ( 10 ) pouvant être fermé électroniquement est contrôlé au moyen de système ( 11 ) vidéo.

13. Protection antivol suivant les revendications 10 et 12,
**caractérisée en ce que**
l'information d'état peut être émise par signal lumineux pour l'exploitation sur le système ( 11 ) vidéo.

14. Protection antivol suivant au moins la revendication 2,
**caractérisée en ce que**
le réceptacle ( 3, 10 ) avec la serrure ( 7 ) et la clé ( 6 ) sont prévus comme moyens recyclés dans la zone du contrôle de sécurité.
